# EUROPEAN PATENT SPECIFICATION

(11) **EP 3 986 625 B1**
(45) Date of publication and mention of the grant of the patent: **18.10.2023**
(21) Application number: 20740397.3
(22) Date of filing: 22.06.2020
(51) Int. Cl.: B29D 30/00, B29D 30/06, B08B 1/00, B08B 1/04, B08B 3/02, B08B 7/00, B29B 17/02, B29B 17/04, B29L 30/00

(54) **METHOD AND SYSTEM FOR REMOVING A SEALING AGENT FROM THE SURFACE OF AN INNER CAVITY OF AN END-OF-USE PNEUMATIC TYRE**
VERFAHREN UND VORRICHTUNG ZUR ENTFERNUNG EINES DICHTMITTELS VON EINER OBERFLÄCHE EINER INNEREN KAVITÄT EINES PNEUMATISCHEN ALTREIFENS
PROCÉDÉ ET APPAREIL D'ELIMINATION D'UN PRODUIT D'ÉTANCHÉITÉ À LA SURFACE D'UNE CAVITÉ INTERNE D'UN PNEUMATIQUE EN FIN DE VIE

(30) Priority: 24.06.2019 IT 201900009930
(43) Date of publication of application: 27.04.2022
(73) Proprietor: Bridgestone Europe NV/SA, 1930 Zaventem (BE)
(72) Inventor: PONTONE, Roberto, 00128 Roma (IT); CAPALDI, Cristian, 00128 Roma (IT); CAMOSI, Luca, 00128 Roma (IT)
(74) Representative: Marchetti, Alessio
(86) International application number: PCT/IB2020/055862
(87) International publication number: WO 2020/261090

(56) References cited:
- EP-A1- 1 604 809
- EP-A1- 3 085 523
- WO-A1-90/11210
- WO-A2-96/41820
- CN-A- 106 733 852
- CN-A- 107 855 300
- CN-A- 108 311 455
- CN-U- 202 762 668
- CN-U- 207 806 024

## Description

### TECHNICAL SECTOR

The present invention relates to a method and a system for removing a sealing agent from the surface of an inner cavity of an end-of-use pneumatic tyre.

### PRIOR ART

As known, a pneumatic tyre comprises a toroidal carcass, which has two annular beads and which supports an annular tread. A tread belt is interposed between the carcass and the tread which comprises a number of tread plies. The carcass supports a pair of sidewalls arranged between the tread and the beads. An innerliner is arranged within the body ply which is airtight, constitutes an inner lining and has the function of retaining the air within the pneumatic tyre in order to maintain the inflation pressure of the pneumatic tyre itself over time.

In recent years pneumatic tyre development has been directed towards pneumatic tyres with an inner lining that is manufactured with a sealing agent that is intended to seal any punctures. Typically, the sealing agent has a high viscosity in order to ensure both the sealing action in relation to any punctures and the stability thereof within the inner cavity regardless of the conditions of the pneumatic tyre.

The sealing agent is applied to a pre-vulcanized pneumatic tyre and preferably to the innerliner within the area of the pneumatic tyre that comes into contact with the road (or the area of the pneumatic tyre wherein punctures can potentially occur). In particular, the sealing agent is applied at the tread and at least partially at the sidewalls.

Furthermore, as is known, due to the large market volumes for pneumatic tyres and the complex recycling process thereof, used pneumatic tyres are today among the greatest sources of waste within Europe. The objectives set by the ETRMA envisage a reduction in the number of pneumatic tyres that are abandoned in landfills, such that in the coming years almost all end-of-use pneumatic tyres will be processed for the production of energy and/or secondary materials.

End-of-use pneumatic tyres, whereupon a sealing agent layer has been applied, cannot however be recycled and must be consigned to thermal demolition, this is because the sealing agent would cause irreparable damage to those shredding machines normally employed in the disposal cycles for end-of-use pneumatic tyres.

The utility model CN202762668U describes a machine for cleaning the surface of a pneumatic tyre using high pressure water jets.

The utility model CN207806024U and the patent application CN108311455A describe a machine for washing and then drying a pneumatic tyre.

The patent application EPO3085523A1 describes a plant for applying a layer of self-sealing material to the inner surface of a pneumatic tyre.

### DESCRIPTION OF THE INVENTION

The aim of the present invention is therefore to provide a system for removing a sealing agent from the surface of an inner cavity of an end-of-use pneumatic tyre that is free from the disadvantages of the state of the art and that is, in particular, easy and inexpensive to manufacture.

A further aim of the present invention is to provide a method for removing a sealing agent from the surface of an inner cavity of an end-of-use pneumatic tyre that is free from the disadvantages of the state of the art and that is, in particular, easy and inexpensive to implement.

According to the present invention, a method and a system are provided for removing a sealing agent from the surface of an inner cavity of an end-of-use pneumatic tyre according to that set forth within the appended claims.

### BRIEF DESCRIPTION OF THE DRAWINGS

The present invention is now described with reference to the attached drawings, which illustrate several non-limiting exemplary embodiments, wherein:
- Figure 1 is a schematic view, with parts removed for clarity, of a device for applying a cryogenic fluid of a system manufactured in accordance with the present invention; and
- Figure 2 is a schematic view, with parts removed for clarity, of a device for removing a layer of sealing agent, of a system manufactured in accordance with the present invention.

### PREFERRED EMBODIMENTS OF THE INVENTION

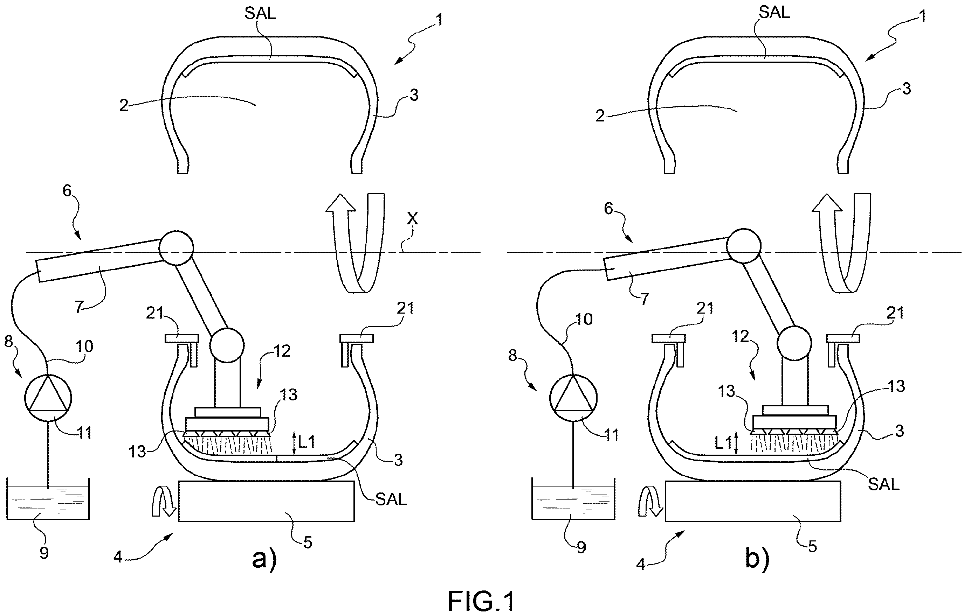

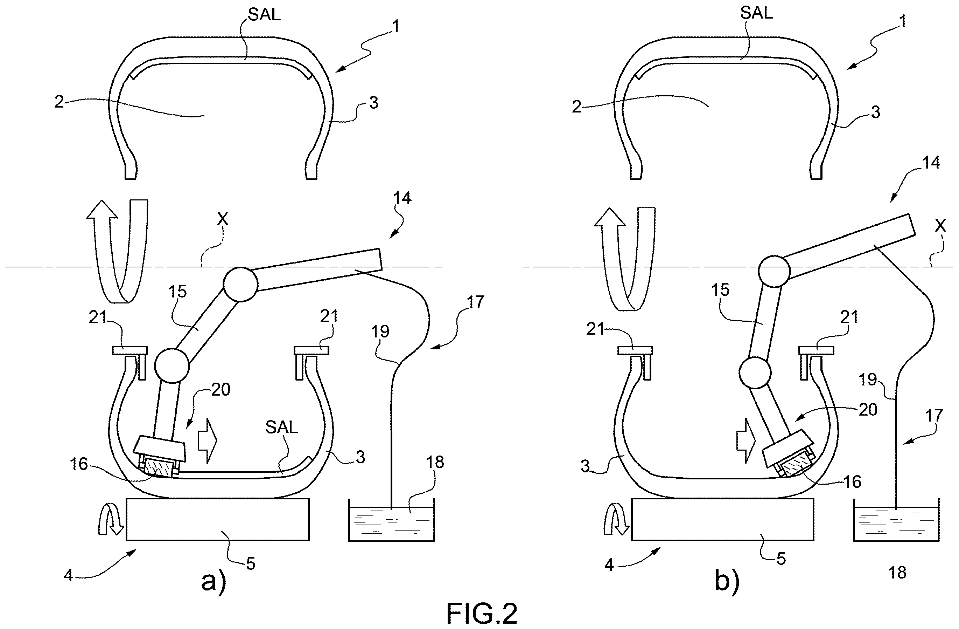

With reference to figures 1 and 2, number 1 indicates a system in the entirety thereof for processing an end-of-use pneumatic tyre 3 that is provided with an inner lining SAL layer manufactured with a sealing agent that is intended to seal any punctures. The system 1 is designed to apply a cryogenic fluid to the SAL layer of sealing agent, that is in turn applied to the surface of an inner cavity 2 of the end-of-use pneumatic tyre 3 and, subsequently, for removing the sealing agent layer from the surface of said inner cavity 2.

The end-of-use pneumatic tyre 3 is arranged upon a support 4 that is predisposed for locking the end-of-use pneumatic tyre 3 and bringing it into rotation about the central axis X thereof via motorized rollers 5. The support 4 is designed to bring the pneumatic tyres 3 into rotation at a substantially constant speed and preferably between 1 and 15 m/min. Preferably, the end-of-use pneumatic tyre 3 is housed within the support 4 in such a way as to prevent any lateral translation of the pneumatic tyre 3 itself during the rotational movement about the axis X.

The system 1 also comprises a device 6 for applying the cryogenic fluid that is conveniently implemented by means of a robot equipped with a movable arm 7 and intended to coat the SAL layer of sealing agent with the cryogenic fluid in a uniform manner. The applicator device 6 is designed to be movable in such a way as to be moved and arranged in an application position within the inner cavity 2 directly facing the SAL layer of sealing agent. In the application position, the applicator device 6 is arranged at a determined distance L₁ (not zero in order to implement an application without contact) from the SAL layer of sealing agent.

The applicator device 6 is intended to uniformly cover the SAL layer of sealing agent with the cryogenic fluid by means of a reciprocating movement between the two lateral ends of the inner cavity 2; in particular, the arm 7 moves within a plane that is substantially perpendicular to the equatorial plane of the end-of-use pneumatic tyre 3. The combination of the rotation of the end-of-use pneumatic tyre 3 about the axis X and the movement of the arm 7 produces an application of the cryogenic fluid with a helical progression. More specifically, the applicator device 6 is intended to apply the cryogenic fluid exclusively within the portion of the end-of-use pneumatic tyre 3 that is provided with the SAL layer of sealing agent and intended to come into contact with the asphalt (in other words, at the tread and, at least partially, at the sidewalls of the end-of-use pneumatic tyre 3).

The applicator device 6 is connected to a circuit 8 supplying the cryogenic fluid and comprising a tank 9, preferably made of a metallic material and containing the cryogenic fluid, a conduit 10 that originates from the tank 9 and that is in hydraulic communication with the applicator device 6, and a pumping device 11 that draws the cryogenic fluid from the tank 9 and feeds it under pressure to the applicator device 6.

According to a preferred variant, the applicator device 6 is implemented by means of a dispensing head 12 at an axial end of the movable arm 7 and which supports at least one nozzle 13 in order to execute the application of the cryogenic fluid in a contactless manner. According to a preferred variant, the dispensing head 12 supports a plurality of nozzles 13 having respective axes that are parallel to one another and perpendicular to the axis X.

In the application position, each nozzle 13 directly faces the SAL layer of sealing agent and is arranged at a distance L₁ from the SAL layer of sealing agent.

The automatic movement of the motorized rollers 5 that bring the end-of-use pneumatic tyre 3 into 360° rotation about the axis X makes it possible to uniformly apply the cryogenic fluid to the entire SAL layer of sealing agent.

According to a preferred variant, the cryogenic fluid employed is liquid nitrogen (N₂), having a boiling point of - 195.82°C. According to a further variant, the cryogenic fluid employed is dry ice (COz), having a boiling point of -78°C.

The cryogenic fluid applied to the SAL layer of sealing agent in the semi-fluid state produces a lowering of the temperature of the SAL layer of sealing agent itself. When the end-of-use pneumatic tyre 3 has completed a series of 360° rotations about the axis X, the SAL layer of sealing agent coated with cryogenic fluid has hardened, thereby reducing the elasticity and viscosity thereof. In other words, the SAL layer of sealing agent, at the temperature of the cryogenic fluid, appears in the solid state.

Finally, the system 1 comprises a device 14 for the removal of the SAL layer of solid sealing agent which is conveniently implemented by means of a robot equipped with a movable arm 15. The removal device 14 is implemented movable in such a way that it can be moved into and arranged in a working position inside the inner cavity 2 directly facing and in contact with the SAL layer of solid sealing agent.

The removal device 14 is intended to remove the SAL layer of solid sealing agent using mechanical abrasion by means of a reciprocating movement between the two lateral ends of the inner cavity 2; in particular, the movable arm 15 moves within a plane that is substantially perpendicular to the equatorial plane of the end-of-use pneumatic tyre 3. The combination of the rotation of the end-of-use pneumatic tyre 3 about the axis X and the movement of the arm 15 leads to removal with a helical progression, which makes it possible to completely remove the SAL layer of solid sealing agent.

According to a preferred variant, the removal device 14 is implemented by means of a head arranged at an axial end of the movable arm 15 and which supports a tool, in particular a grinding wheel, 16 in order to implement the removal/abrasion of the SAL layer of solid sealing agent.

A suction circuit 17 for the sealing agent, removed by means of the removal device 6, is connected to the removal device 14. The suction circuit 17 is implemented by directing a flow of particles/dust, produced by the action of the grinding wheel 16, onto the SAL layer of solid sealing agent to the outside of the inner cavity 2 and of the pneumatic tyre 3. More specifically, the suction circuit 17 comprises a tank 18 for the collection of the sealing agent, a suction pump (not shown) which is connected to a suction head 20 via a conduit 19 which originates from the suction head 20 and flows into the tank 18. The suction head 20 draws the sealing agent removed from the inner cavity 2 and feeds it to the tank 18 via the conduit 19. The suction head 20 is movable, with a reciprocating movement between the two lateral ends of the inner cavity 2; in particular the suction head 20 moves within a plane that is substantially perpendicular to the equatorial plane of the end-of-use pneumatic tyre 3.

Preferably, the suction head 20 is formed integrally with the removal device 14; in other words, the head arranged at the axial end of the movable arm 15, which supports the grinding wheel 16, is also equipped with the suction head 20. The suction head 20 is preferably arranged in proximity to the grinding wheel 16.

It is important to be able to eliminate/suction the SAL layer of solid sealing agent removed by the grinding wheel 16 as long as it is in the solid state in order to prevent it from returning to the semi-fluid state following an increase in the temperature thereof and, as a result, having an elasticity and a viscosity such as to render the SAL layer of sealing agent difficult to machine/manipulate.

The combination of the automatic movement of the support 4, which brings into 360° rotation the end-of-use pneumatic tyre 3 about the axis X, and the movement of the arm 15 makes it possible to remove the entire SAL layer of solid sealing agent.

The system 1 is preferably housed within an isolated chamber in order to maintain the lowest possible temperatures.

According to one variant, the applicator device 6 and the removal device 14 can be accommodated on a common arm (that is to say, according to this variant, the arm 7 and the arm 15 may coincide).

Hereinafter there will be described the method of operation of the system 1, which includes, in succession, the following steps:
- an operator or, alternatively, an automatic manipulator arranges the end-of-use pneumatic tyre 3 on the support 4 and locks it by means of sidewalls 21 in such a way as to prevent any lateral translation of the pneumatic tyre 3 itself;
- in response to a given operator command, the applicator device 6 is placed in the application position while being inserted into the interior of the cavity 2 and arranging itself at the distance L₁ from the SAL layer of sealing agent;
- the application of the cryogenic fluid is started by means of the dispensing head 12 (in particular, by means of the nozzles 13) while the end-of-use pneumatic tyre 3 is brought into rotation about the axis X by the motorized rollers 5; at the same time, the arm 7 moves with a reciprocating movement between the two lateral extremities of the inner cavity 2;
- once an interval of time of a predetermined duration, that can be varied as a function of the type of cryogenic fluid employed, has elapsed, the application of cryogenic fluid stops;
- the motorized rollers 5 are stopped and the movement of the arm 7 between the two lateral ends of the inner cavity 2 is stopped;
- the applicator device 6 is extracted from the inner cavity 2;
- the removal device 14 is inserted into the inner cavity 2;
- once an interval of time from the start of the application of the cryogenic fluid, that is of predetermined duration, and variable as a function of the type of cryogenic fluid employed, has elapsed, the grinding wheel 16 is placed in contact with the sealing agent layer in order to begin the removal;
- the end-of-use pneumatic tyre 3 is again brought into rotation about the axis X by the motorized rollers 5, the arm 15 simultaneously moves with a reciprocating movement between the two lateral ends of the inner cavity 2, while the grinding wheel 16 implements the abrasion of the SAL layer of solid sealing agent;
- during the rotation of the end-of-use pneumatic tyre 3 about the axis X and simultaneously with the action of the grinding wheel 16, the suction element 20, that draws the SAL layer of solid sealing agent suctioned from the inner cavity 2 and feeds it to the tank 18, is activated;
- at the conclusion of the abrasion and suction of the SAL layer of solid sealing agent (when the end-of-use pneumatic tyre 3 has completed a series of 360° rotations in order to obtain the helical progression), the 5 motorized rollers are stopped and the movement of the arm 15 between the two lateral ends of the inner cavity 2 is stopped;
- the removal device 14 is extracted from the inner cavity 2;
- an operator or, alternatively, an automatic manipulator removes the sidewalls 21 and extracts the end-of-use pneumatic tyre 3 from the support 4.

The advantages of the system 1 described in the preceding discussion are evident. In particular, the use of the applicator and removal device 6, 14 makes it possible to efficiently remove the entire SAL layer of sealing agent from the end-of-use pneumatic tyre 3, which can then be recycled and not consigned to thermal demolition.

## Claims

1. System for the treatment of an end-of-use pneumatic tyre (3) that is provided with an inner lining (SAL) layer, implemented with a sealing agent intended to seal any punctures and at least partially applied to the surface of an inner cavity (2) of the pneumatic tyre (3); the system (1) comprises:
an applicator device (6) which is equipped with a first movable arm (7) having at least one nozzle (13) at an axial end which dispenses a cryogenic fluid, preferably liquid nitrogen, for uniformly coating the (SAL) layer of sealing agent in such a way that the (SAL) layer of sealing agent reaches the solid state;
a device (14) for the removal of the (SAL) layer of solid sealing agent which is equipped with a second movable arm (15) having at least one tool (16) for removing the (SAL) layer of solid sealing agent by mechanical abrasion at an axial end; and
a circuit (17), for suctioning the solid sealing agent, intended to direct, to the outside of the inner cavity (2) and by means of the suction, a flow of particles/dust produced by the action of the tool (16) upon the (SAL) layer of solid sealing agent.

2. System according to claim 1, wherein the first arm (7) is movable between the two lateral ends of the inner cavity (2) and is arranged within the inner cavity (2) in such a way that the nozzle (13) is located at a non-zero distance (L₁) from the (SAL) layer of sealing agent.

3. System according to claim 1 or 2, wherein the first movable arm (7) is equipped with a plurality of nozzles (13) at one of the axial ends thereof having respective axes that are parallel to one another and perpendicular to an axis (X) of symmetry of the end-of-use pneumatic tyre (3).

4. System according to any of the preceding claims, wherein the suction circuit (17) comprises a tank (18) for the collection of the sealing agent and a suction pump which is connected by means of a conduit (19) to a suction head (20) which is movable between the two lateral ends of the inner cavity (2).

5. System according to claim 4, wherein:
the suction head (20) is integrally formed with the suction device (14); and
the second arm (15) is provided at an axial end of both said tool (16) and of the suction head (20).

6. System according to any of the preceding claims and comprising a support (4) predisposed for bringing the end-of-use pneumatic tyre (3) into rotation about a central axis (X) thereof by means of motorized rollers (5) and to lock it with the sidewalls (21) such as to impede any lateral translation.

7. Method for the treatment of an end-of-use pneumatic tyre (3) that is provided with an inner lining (SAL) layer, manufactured with a sealing agent intended to seal any punctures and at least partially applied to the surface of an inner cavity (2) of the pneumatic tyre (3); the method comprises the following steps:
dispensing a cryogenic fluid, preferably liquid nitrogen, for uniformly coating the (SAL) layer of sealing agent in such a way that the (SAL) layer of sealing agent reaches the solid state;
removing the (SAL) layer of solid sealing agent by means of mechanical abrasion, after a time interval having a predetermined duration from the start of the dispensing step; and
suctioning the flow of particles/dust produced by the removal step in directing them to the outside of the inner cavity (2) .

8. Method according to claim 7, wherein the removal step is started once a time interval, having a duration which is variable as a function of the type of cryogenic fluid employed from the start of the dispensing step, has elapsed.

9. Method according to claim 7 or 8 and comprising the further steps of setting in rotation the end-of-use pneumatic tyre (3) about the axis (X) of symmetry thereof.

10. Method according to any of the claims from 7 to 9, wherein the suction step is implemented simultaneously with the removal step.

## Patentansprüche

1. System für die Behandlung eines ausgedienten Luftreifens (3), der mit einer inneren Auskleidungsschicht (SAL)-Schicht versehen ist, die mit einem Dichtmittel implementiert ist, das dazu bestimmt ist, beliebige Durchstiche abzudichten, und mindestens teilweise auf die Oberfläche eines inneren Hohlraums (2) des Luftreifens (3) aufgebracht ist; wobei das System (1) umfasst:
eine Aufbringungsvorrichtung (6), die mit einem ersten beweglichen Arm (7) ausgestattet ist, der mindestens eine Düse (13) an einem axialen Ende aufweist, das ein kryogenes Fluid, vorzugsweise Flüssigstickstoff, zum gleichmäßigen Beschichten der (SAL)-Schicht aus Dichtmittel derart abgibt, dass die (SAL)-Schicht aus Dichtmittel den festen Zustand erreicht;
eine Vorrichtung (14) für die Entfernung der (SAL)-Schicht aus festem Dichtmittel, die mit einem zweiten beweglichen Arm (15) ausgestattet ist, der mindestens ein Werkzeug (16) zum Entfernen der (SAL)-Schicht aus festem Dichtmittel durch mechanischen Abrieb an einem axialen Ende aufweist; und
einen Kreislauf (17) zum Ansaugen des festen Dichtmittels, der dazu bestimmt ist, an die Außenseite des inneren Hohlraums (2) und mittels der Absaugung, einen Strom von Partikeln/Staub, der durch die Wirkung des Werkzeugs (16) erzeugt wird, auf die (SAL)-Schicht aus festem Dichtmittel zu lenken.

2. System nach Anspruch 1, wobei der erste Arm (7) zwischen den zwei seitlichen Enden des inneren Hohlraums (2) beweglich ist und innerhalb des inneren Hohlraums (2) derart angeordnet ist, dass sich die Düse (13) in einem Nicht-Null-Abstand (L₁) von der (SAL)-Schicht aus Dichtmittel befindet.

3. System nach Anspruch 1 oder 2, wobei der erste bewegliche Arm (7) mit einer Vielzahl von Düsen (13) an einem der axialen Enden davon ausgestattet ist, die jeweilige Achsen aufweisen, die parallel zueinander und senkrecht zu einer Achse (X) einer Symmetrie des ausgedienten Luftreifens (3) sind.

4. System nach einem der vorstehenden Ansprüche, wobei der Saugkreislauf (17) einen Tank (18) für die Sammlung des Dichtmittels und eine Saugpumpe umfasst, die mittels einer Leitung (19) mit einem Saugkopf (20) verbunden ist, der zwischen den zwei seitlichen Enden des inneren Hohlraums (2) beweglich ist.

5. Verfahren nach Anspruch 4, wobei:
der Saugkopf (20) mit der Saugvorrichtung (14) einstückig ausgebildet ist; und
der zweite Arm (15) an einem axialen Ende sowohl des Werkzeugs (16) als auch des Saugkopfes (20) bereitgestellt ist.

6. System nach einem der vorstehenden Ansprüche und umfassend einen Träger (4), der zum Versetzen des ausgedienten Luftreifens (3) in Rotation um eine Mittelachse (X) davon mittels motorisierter Rollen (5) prädisponiert ist und um ihn mit den Seitenwänden (21) zu verriegeln, sodass eine beliebige seitliche Verschiebung behindert wird.

7. Verfahren für die Behandlung eines ausgedienten Luftreifens (3), der mit einer inneren Auskleidungsschicht (SAL)-Schicht versehen ist, die mit einem Dichtmittel hergestellt ist, das dazu bestimmt ist, beliebige Durchstiche abzudichten, und mindestens teilweise auf die Oberfläche eines inneren Hohlraums (2) des Luftreifens (3) aufgebracht ist; wobei das Verfahren die folgenden Schritte umfasst:
Abgeben eines kryogenen Fluids, vorzugsweise von Flüssigstickstoff, zum gleichmäßigen Beschichten der (SAL)-Schicht aus Dichtmittel, derart, dass die (SAL)-Schicht aus Dichtmittel den festen Zustand erreicht;
Entfernen der (SAL)-Schicht aus festem Dichtmittel mittels mechanischen Abriebs, nach einem Zeitintervall, das eine vorbestimmte Dauer von dem Beginn des Abgabeschritts aufweist; und
Ansaugen des Stroms von Partikeln/Staub, der durch den Entfernungsschritt erzeugt wird, durch Lenken davon zu der Außenseite des inneren Hohlraums (2).

8. Verfahren nach Anspruch 7, wobei der Entfernungsschritt gestartet wird, sobald ein Zeitintervall, das eine Dauer aufweist, die in Abhängigkeit von der Art von kryogenem Fluid variabel ist, das von dem Beginn des Abgabeschritts genutzt wird, abgelaufen ist.

9. Verfahren nach Anspruch 7 oder 8 und umfassend die weiteren Schritte des Setzens des ausgedienten Luftreifens (3) in Rotation um die Achse (X) der Symmetrie davon.

10. Verfahren nach einem der Ansprüche 7 bis 9, wobei der Saugschritt mit dem Entfernungsschritt gleichzeitig durchgeführt wird.

## Revendications

1. Système pour le traitement d'un pneumatique en utilisation finale (3) qui est pourvu d'une couche de revêtement interne (SAL), mis en oeuvre avec un agent d'étanchéité destiné à étanchéifier des perforations quelconques et au moins partiellement appliqué à la surface d'une cavité interne (2) du pneumatique (3) ; le système (1) comprenant :
un dispositif applicateur (6) qui est équipé d'un premier bras mobile (7) ayant au moins une buse (13) au niveau d'une extrémité axiale qui distribue un fluide cryogénique, de préférence de l'azote liquide, pour revêtir uniformément la couche (SAL) d'agent d'étanchéité de telle sorte que la couche (SAL) d'agent d'étanchéité atteint l'état solide ;
un dispositif (14) pour l'élimination de la couche (SAL) d'agent d'étanchéité solide qui est équipé d'un second bras mobile (15) ayant au moins un outil (16) pour éliminer la couche (SAL) d'agent d'étanchéité solide par abrasion mécanique au niveau d'une extrémité axiale ; et
un circuit (17), pour aspirer l'agent d'étanchéité solide, destiné à diriger, vers l'extérieur de la cavité interne (2) et au moyen de l'aspiration, un flux de particules/poussières produites par l'action de l'outil (16) sur la couche (SAL) d'agent d'étanchéité solide.

2. Système selon la revendication 1, dans lequel le premier bras (7) est mobile entre les deux extrémités latérales de la cavité interne (2) et est agencé à l'intérieur de la cavité interne (2) de telle sorte que la buse (13) est située à une distance non nulle (L₁) de la couche (SAL) d'agent d'étanchéité.

3. Système selon la revendication 1 ou 2, dans lequel le premier bras mobile (7) est équipé d'une pluralité de buses (13) au niveau d'une de ses extrémités axiales ayant des axes respectifs qui sont parallèles entre eux et perpendiculaires à un axe (X) de symétrie du pneumatique en utilisation finale (3).

4. Système selon l'une quelconque des revendications précédentes, dans lequel le circuit d'aspiration (17) comprend un réservoir (18) pour la collecte de l'agent d'étanchéité et une pompe d'aspiration qui est reliée au moyen d'un conduit (19) à une tête d'aspiration (20) qui est mobile entre les deux extrémités latérales de la cavité interne (2).

5. Système selon la revendication 4, dans lequel :
la tête d'aspiration (20) est formée d'un seul tenant avec le dispositif d'aspiration (14) ; et
le second bras (15) est prévu au niveau d'une extrémité axiale à la fois dudit outil (16) et de la tête d'aspiration (20).

6. Système selon l'une quelconque des revendications précédentes et comprenant un support (4) prédisposé pour amener le pneumatique en utilisation finale (3) en rotation autour d'un axe central (X) de celui-ci au moyen de rouleaux motorisés (5) et pour le verrouiller avec les parois latérales (21) de manière à empêcher une quelconque translation latérale.

7. Procédé pour le traitement d'un pneumatique en utilisation finale (3) qui est pourvu d'une couche de revêtement interne (SAL), fabriquée avec un agent d'étanchéité destiné à étanchéifier des perforations quelconques et au moins partiellement appliquée à la surface d'une cavité interne (2) du pneumatique (3) ; le procédé comprend les étapes suivantes :
la distribution d'un fluide cryogénique, de préférence de l'azote liquide, pour revêtir uniformément la couche (SAL) d'agent d'étanchéité de telle sorte que la couche (SAL) d'agent d'étanchéité atteint l'état solide ;
l'élimination de la couche (SAL) d'agent d'étanchéité solide au moyen d'une abrasion mécanique, après un intervalle de temps ayant une durée prédéterminée à partir du début de l'étape de distribution ; et
l'aspiration du flux de particules/poussières produites par l'étape d'élimination pour les diriger vers l'extérieur de la cavité interne (2).

8. Procédé selon la revendication 7, dans lequel l'étape d'élimination est démarrée une fois qu'un intervalle de temps, ayant une durée variable en fonction du type de fluide cryogénique employé à partir du début de l'étape de distribution, s'est écoulé.

9. Procédé selon la revendication 7 ou 8 et comprenant les étapes supplémentaires de réglage en rotation du pneumatique en utilisation finale (3) autour de l'axe (X) de symétrie de celui-ci.

10. Procédé selon l'une quelconque des revendications 7 à 9, dans lequel l'étape d'aspiration est mise en oeuvre simultanément à l'étape d'élimination.
